# EUROPEAN PATENT APPLICATION

(11) **EP 4 628 243 A1**
(43) Date of publication of application: **08.10.2025**
(21) Application number: 24168361.4
(22) Date of filing: 04.04.2024
(51) Int. Cl.: B23K 26/03, B23K 26/08, B23K 26/38, B23K 37/02, B23K 101/18

(54) **FLATBED LASER CUTTING MACHINE, SYSTEM AND METHOD**

(71) Applicant: Bystronic Laser AG, 3362 Niederönz (CH)
(72) Inventor: UMUHIRE KAMMER, Angélique, 8049 Zürich (CH); SKOVOLAS, Konstantinos, 8005 Zürich (CH); BADER, Roland, 4933 Rütschelen (CH); LÜDI, Andreas, 3400 Burgdorf (CH)
(74) Representative: Frei Patent Attorneys

(57) **Abstract**

The present disclosure concerns a flatbed laser cutting machine for cutting sheet metal workpieces (12). The machine comprises a laser cutting head (10), a processing laser source and a workpiece support for supporting a sheet metal workpiece (12), the machine being equipped for causing the laser cutting head (10) to move relative to the workpiece support in two dimensions and being equipped to emit a beam of processing laser radiation (21) from the laser cutting head for making a controlled cut in a workpiece (12). The machine further comprises a vibrometer (22) and is equipped for the laser cutting head (10) to emit vibrometer probing radiation (29), of the vibrometer (22). The machine is further equipped for a reflected portion of the vibrometer probing radiation to enter the laser cutting head (10) and to then be used for measuring vibration of the workpiece (12). Since radiation is used to measure the vibration, the vibration is measured in a contactless manner.

## Description

The invention is in the field of thermal cutting machines, in particular laser cutting machines, especially flatbed laser cutting machines for cutting flat workpieces, for example sheet metal. In particular, it relates to

Process monitoring in a laser cutting machine allows the machine and/or the operator to change settings during the process so as to optimize the efficiency of the cutting process and the cutting quality of the resulting cut. Settings that are changed may comprise the laser power, the focus position and/or other focusing properties of the processing laser radiation such as the beam width, the feed rate (the speed by which the laser beam is moved relative to the workpiece), the distance between a laser cutting head, by which the processing laser beam is emitted, and the workpiece, a process gas pressure, etc.

According to the state of the art, process monitoring of sheet metal laser cutting is mainly done by optical means, using a photodiode or camera. The photodiode or camera captures light emitted by the metal sheet workpiece in reaction to the incidence of the processing laser radiation. As an alternative, as for example taught in WO 2021/190889, the photodiode or camera may capture light that is thrown back by the workpiece when the workpiece is illuminated by an illumination light source separate from the processing laser light source, such as a light emitting diode (LED).

For laser ablation of plastic molded parts, for laser marking semiconductors or for laser welding or also beam cutting, it has been proposed to use the sound emitted by the workpiece upon illumination by the processing beam as a means for processing monitoring see for example EP 1 407 851, US 10,811,326, DE 10 2018 008 873. This can be done by a sensor that is physically attached to the workpiece. Another possibility to do so is by using a laser vibrometer in which a probe laser beam is directed onto the surface of the vibrating object, and the Doppler effect is used to measure the vibration. However, the approaches taught in these documents would not be suitable for sheet metal laser cutting. This is because sensing needs to be done close to the spot where the processing laser beam is incident on the workpiece surface for the measurement result to be meaningful. However, in sheet metal laser cutting, the workpiece extends over a large area, and the laser beam cutting may, and will be, carried out over the whole area. It would not be economical to provide for an array of sensors or probe laser arrangements that is sufficiently dense for probing the entire area.

It is an object of the present invention to provide a metal sheet laser cutting machine, i.e., a flatbed laser cutting machine and a laser processing system with an improved process monitoring and/or quality detection as well as an according method.

This object is achieved by the machine, the system and the method as defined in the claims.

According to an aspect of the present invention, a flatbed laser cutting machine for cutting sheet metal workpieces is provided, the machine comprising a laser cutting head, a processing laser source and a workpiece support for supporting a sheet metal workpiece, the machine being equipped for causing the laser cutting head to move relative to the workpiece support in at least two dimensions (x,y) and being equipped to emit a beam of processing laser radiation from the laser cutting head for making a controlled cut in a workpiece supported by the workpiece support when the laser cutting head moves relative to the workpiece. The machine further comprises a vibrometer and is equipped for the laser cutting head to emit vibrometer probing radiation, for example a probing laser beam, of the vibrometer, the vibrometer probing radiation being different from the processing laser beam. For example, the vibrometer probing radiation may have a wavelength substantially different from a wavelength of the processing laser radiation. The machine is further equipped for a reflected portion of the vibrometer probing radiation to enter the laser cutting head and to then be used for measuring vibration, being indicative of structure borne sound, of the workpiece. Since radiation is used to measure the vibration, the structure-borne sound is measured in a contactless manner.

This approach is firstly based on the insight that the vibration behavior around the spot where the processing laser is incident and the workpiece is being cut is a useful indicator for the cutting quality. Such vibration is induced by structure-borne sound caused on the one hand by a processing gas flow that generates sound when modulated e.g. by burr and roughness in and around the cutting kerf. On the other hand, vibration may be induced by the substantial energy input on the workpiece by the laser beam, accompanied by melting and/or burning of workpiece material at this spot and mechanical dislocation of workpiece material, for example by blowing the molten material away by a processing gas flow. Generally, structure-borne sound is vibration of the workpiece, which vibration will travel in the workpiece, and it carries information on the workpiece and changes the workpiece undergoes, independent of the initial reason for the vibration. More specifically, the vibrational behavior carries information on the geometry of the workpiece around the spot where the processing laser is incident (the geometry immediately influences the resonance) but also potentially on the dynamics of the process. Quality relevant parameters such as burr, roughness of the cutting kerf, changes of material properties (burning) etc. all have an influence on the vibrational behavior of the workpiece, and this allows to draw conclusions on these parameters from the vibration. The publications of Kek, T., Grum J.: 'Assessment of laser cutting quality using acoustic emission signals', Int.Conf. of the Slovenian Society for Non-Destructive Testing, Ljubliana, 2009 and Kek, T., Grum J.: 'AE signals during laser cutting of different steel sheet thicknesses', Lijubliana, 2010 describe results of the acoustic emission (AE) bursts measurement after the laser cutting of stainless steel, mild steel and structural steel sheets of various thicknesses using oxygen or nitrogen as cutting gas. For the detection of AE, a contact resonant PZT sensor is used. It measures ultrasonic waves in a frequency range between 100 and 450 kHz. The laser cut quality, which is related to the size of the burr (also called dross) and the roughness of the cut edge and/or of the cut surface can be successfully forecast based on the captured AE signals from during the cutting process and from AE bursts immediately after the termination of laser cutting.

The present invention, in contrast to a contact sensor, proposes to use the laser cutting head to not only emit the laser processing beam, but to use the laser cutting head also as a component of a vibrometer in that the vibrometer probing radiation is emitted by the laser cutting head. The machine is also equipped for reflected vibrometer probing radiation, reflected by the workpiece, to enter the laser cutting head and to be used for Doppler vibrometry measurement (i.e. by being combined with a reference beam and being directed to a photodetector). Thereby, the probing beam and the receiving structure receiving the reflected vibrometer probing radiation for the vibrometry participate in any horizontal movement of the laser cutting head, whereby the measurements of the vibration become possible over the entire area where laser cuts are possible. The vibrometer at any time measures the vibrations at the location of the laser cutting head, thus near the position where the cut is made, and the measured structure-borne sound therefore includes first-hand information on the cutting quality.

The broadest range of vibration frequencies, measured by the vibrometer, of potential interest may be between 0 and 5 MHz. In embodiments, vibration can also be measured in a sub-range of this range. In embodiments, such sub-range can be within a range between 20kHz and 4MHz, more specific within a range between 30kHz and 500 kHz. Of course, it is not necessary that the measured sub-range is as broad as these broadest ranges. It may be sufficient to analyze a comparably narrower sub-range.

Especially, the vibrometer may be a Laser Doppler vibrometer, i.e. the vibrometer probing radiation may be probing laser radiation, the vibrometer comprising a probing laser radiation source, such as a He-Ne laser source or also a laser diode, a fiber laser, a Nd:YAG laser or any other laser, for example capable of emitting laser radiation with a high (temporal) coherence, i.e. with a high coherence length.

In Laser Doppler vibrometry, the reflected portion of the probing laser radiation is made to interfere with a reference portion of the laser radiation emitted by the probing laser radiation source. A possible Doppler shift caused by the reflecting surface moving (in a direction perpendicular to the reflecting surface) may thereby be detected.

To be suitable for the Laser Doppler vibrometry, the coherence length of the vibrometer probing radiation may be at least as high as the path difference between the probing laser radiation and the reference portion. If measures are taken to cause the path length of the reference portion to be approximately equal to the path length on the measurement path (i.e. the path to the surface of the workpiece and back to where the reflected portion is recombined with the reference portion), then the coherence length needs to be at least as high as twice the expected variation in the distance between the laser cutting head and the workpiece. If such measures are not taken, a lower limit for the coherence length is approximately the difference between these path lengths. Generally, the coherence length may be more than 1 mm or more than 3 mm, especially more than 10 mm, in particular more than 30 mm. It may for example be 10 cm or more; lasers emitting radiation with coherence lengths of up to several meters are readily available on the market and can be used for the present invention.

Large coherence lengths are especially in contrast for example to optical coherence tomography measurements, where the coherence length is chosen to be very short, usually less than 100 µm, for a sufficient depth resolution of an acquired 3D image.

It is known to impose a frequency shift, for example by a Bragg cell, on one of the vibrometer probing radiation and of the reference portion before the reflected vibrometer probing radiation (the measurement radiation) and the reference portion are brought to interference. Thereby, the frequency difference between the measurement radiation and the reference radiation oscillates around this frequency shift, the deviation from this frequency shift being the Doppler shift and being proportional to the velocity of the reflecting surface. Due to the imposed frequency shift, it is possible to readily distinguish between a movement towards the probing laser beam or away from it. Electronic demodulation, with the frequency shift considered as modulation frequency, yields the Doppler shift and hence the velocity. A description of the principle and applications of laser Doppler vibrometry can be found in literature, and Laser Doppler vibrometers are commercially available.

In a group of embodiments, the vibrometer is equipped for a combination of vibrometry and 2D imaging. In these embodiments, the machine further comprises a camera equipped to capture a two-dimensional image of an area illuminated by the vibrometer probing radiation. In these embodiments, the vibrometer probing radiation source - especially a probing laser source - has a double function. Firstly, it serves as radiation source for the vibrometry measurement. Secondly, it serves for illuminating a two-dimensional area near the spot where the processing laser is incident, for example around this spot. This illumination helps to capture an image of the workpiece, in particular of the cut kerf geometry near the spot without having to be restricted to effects caused by the processing laser beam, such as glowing.

Since the vibrometer probing radiation also serves for vibrometry, it will usually be subject to the requirement of being sufficiently coherent and will thus be narrowband radiation. This ideally combines with an approach of embodiments of the named group of embodiments in which an optical filter, for example a bandpass filter is placed to act on the radiation directed to the camera. More in particular, the optical filter may be such as to let radiation having the wavelength of the vibrometer probing radiation through but to block radiation having the wavelength of the processing radiation - and for example also other radiation having wavelengths different from the wavelength of the vibrometer probing radiation. Thus, if the optical filter is a bandpass filter, it will have a transmission range that extends around the wavelength of the vibrometer probing radiation. In embodiments, the used bandpass filter is a narrowband bandpass filter so that light coming from the glow caused by the processing laser beam is effectively filtered, and the advantages of a laser vibrometer probing radiation source (with coherent laser sources being narrowband radiation sources) are ideally used.

Also, in embodiments of this group of embodiments, the machine may have a beam expander arranged for the vibrometer probing radiation to hit the surface of the workpiece in an area that is wide enough while the vibrometer probing radiation is still well collimated. Such beam expander may for example be arranged between a beam splitter splitting the radiation coming from a vibrometer probing radiation source between the vibrometer probing radiation and a reference radiation portion on the one hand and the workpiece on the other hand.

In embodiments of this group of embodiments, the camera is integrated in the laser cutting head. In embodiments, the entire vibrometer may optionally be integrated in the laser cutting head. Especially, the camera may be integrated with the vibrometer, for example arranged within a housing of the vibrometer.

In embodiments of this group of embodiments, the machine further comprises a reflected radiation beam splitter for reflected vibrometer probing radiation. Thereby, a first fraction of the reflected radiation may be directed to the camera, and a second fraction of the reflected radiation may be directed to a photodetector of the vibrometer, together with reference radiation with which it interferes for the vibrometry measurement.

It would also be possible, however, to use the camera itself as a photodetector of the vibrometer in that the intensity of the vibration caught by the camera or of a certain partial area is used as the photodetector signal - provided the camera is fast enough for this kind of measurement.

Generally, the vibrometer probing radiation may impinge on the surface of the workpiece in an area that is wider than the spot of the processing laser beam on the workpiece. Thus, this area will be wider than the generated kerf, and when the laser cutting head moves relative to the workpiece, the region illuminated by the vibrometer probing radiation will extend on both sides of the kerf, thus effectively defining a strip with portions on each side of the kerf.

Especially, the vibrometer probing radiation may be emitted by the laser cutting head to be coaxial with the processing radiation. For example, the area illuminated on the workpiece surface by the vibrometer probing radiation may extend to around the spot on which the processing laser beam is incident.

Directing the vibrometer probing radiation onto the workpiece coaxially with the laser processing beam has a substantial advantage: During operation, the laser processing beam will be moving and be subject to direction changes. The property of the vibrometer probing radiation being coaxial with the processing beam makes possible that the vibrometer probing radiation is symmetrical independently of the cutting direction.

The vibrometer probing radiation may be generated by a vibrometer probing radiation source, for example a probing laser radiation source, that is located in the laser cutting head. It would also be possible, however, to use vibrometer probing radiation source, for example a probing laser radiation source, that is outside of the laser cutting head. Then, the vibrometer probing radiation is guided to the laser cutting head by an appropriate light guide.

In many embodiments, the vibrometer probing radiation source and the detector of the vibrometer are close to each other to avoid a long path (and losses/distortions etc.) of the reference radiation used for vibration detection. In a first group of embodiments, therefore, the entire vibrometer comprising the vibrometer probing radiation source and the detector is inside of the laser cutting head. In a second group of embodiments, the entire vibrometer is outside of the laser cutting head and connected thereto by suitable radiation guiding means. It is not excluded though, that the vibrometer comprises both, elements within the laser cutting head and elements outside of the laser cutting head.

In embodiments in which the vibrometer probing radiation source is in the laser cutting head - or the vibrometer probing radiation is guided to the laser cutting head by a light guide separate from the light guide by which the processing laser radiation is transported - the laser cutting head may comprise a dichroic mirror distinguishing between the processing radiation and the vibrometer probing radiation. For example, the dichroic mirror may be reflective for the processing radiation but transmissive for the vibrometer probing radiation.

In embodiments, the vibrometer probing radiation may be guided to the laser cutting head by a fiber that also guides the processing radiation. Especially, the vibrometer probing radiation may be guided to the laser cutting head coaxially with the processing radiation, for example in a cladding (or outer core) of a transport fiber that directs the processing laser radiation.

As is known for Laser Doppler vibrometers, the vibrometer probing radiation or the reference portion may be subject to a frequency shift, for example caused by a Bragg cell, so that when the reflected portion of the vibrometer probing radiation is combined with the reference portion, the frequencies are offset to each other, by a value that corresponds to a sum of a well-known offset (the frequency shift) and a Doppler shift induced by the movement of the reflecting surface of the workpiece, often in the tens of MHz, for example between 30 and 40 MHz.

In a group of embodiments, a (single) vibrometer probing radiation source is used, for example a probing laser source. The radiation from the vibrometer probing radiation source is split, by a (first) beam splitter, between the vibrometer probing radiation and the reference portion. In a sub-group of embodiments, a polarizing beam splitter is used as the first beam splitter. The machine then further comprises a quarter-wave plate through which the vibrometer probing radiation is directed between the first beam splitter and the workpiece. By this measure, the signal-to-noise ratio is improved because the vibrometer probing radiation may travel essentially free of losses in beam splitters.

The present invention also concerns a laser processing system that is equipped for analyzing the measured vibration. Such laser processing system may in embodiments consist of the laser cutting machine, i.e. the laser cutting machine may itself comprise the tools necessary for the analysis and for outputting the results of the analysis and/or for adjusting at least one parameter of the cutting process. Alternatively, the laser processing system may comprise equipment separate from the laser cutting machine, which equipment receives the result of the vibration measurement or pre-processed data based thereon and which is equipped for analyzing the measured vibration. Such separate equipment may for example be a software tool for running on a computer.

The vibrometer measures vibration of the workpiece, for example in the form of a surface velocity as a function of time, which information can be transformed into a vibration spectrum (sometimes referred to a spectrogram or sonogram). The laser processing system may use the result of the vibration measurement for process control. Especially, the laser processing system may determine a quality of the cut from the vibration measurement, especially a burr size and/or an edge roughness. In embodiments, further data may be included in the determination, for example 2D image data obtained by the camera.

The determination of the quality of the cut may comprise a rule-based determination. For example, vibration above a certain intensity or vibration at certain frequencies may be indicative of problems with the cutting process, of the existence of a burr, etc. According rules, which may include parameters about the workpiece, may be programmed in the system.

In addition or as an alternative to a rule-based determination, the determination may comprise machine learning determination. To this end, the system is initially subject to a training phase in which both, measured vibration data and at least one quantity that is indicative of the quality - and that may be obtained by an additional measurement and/or based on subjective criteria, etc. - may be fed to the system. After such a training phase, the system is capable of using correlations between the measured vibration and the quality of the cut to determine the cutting quality and possibly also qualitative or quantitative conclusions that allow to make targeted adjustments of the cutting process.

As mentioned, the laser processing system may be equipped to determine a cutting quality. A quantity that represents the cutting quality may for example include a quality value that is a measure for the quality of the cut, for example a value between 0 (no cut) and 10 (cut with a quality meeting all standards), or similar. Such quantity may, however, also include a differentiated value, such as a value indicative of the burr size, an edge roughness value, etc. Also combinations are possible, and it is also possible to define a quality value based on the differentiated values.

In embodiments a quality value of the mentioned kind is compared, by the laser processing system, with a quality threshold or with a plurality of quality thresholds. Depending on the outcome of this comparison, the cutting operation may be interrupted. Alternatively, at least one processing parameter may be adapted, for example a feed rate, a laser power, a processing laser beam focus position and/or other focusing properties of the processing laser radiation, an assist gas flow, a laser cutting head z position (distance to the workpiece surface) and/or other parameter. Embodiments may include such adaptation of a processing parameter if the quality value is in an intermediate range, and may include an interruption if the quality is below a minimum threshold and/or if the quality value does not sufficiently increase after the adaptation of the parameter.

In addition to concerning a flatbed laser cutting machine and a laser processing system, the present invention also concerns a method of operating a laser processing machine, and a laser processing system, for example substantially as described and claimed in the present text. The method may include the steps of:
- Placing a metal sheet workpiece on the workpiece support;
- Emitting, by the laser cutting head a beam of processing laser radiation onto the workpiece while it is supported by the workpiece support and moving the laser cutting head relative to the workpiece support while the processing laser radiation is being emitted;
- While the processing laser radiation is being emitted, emitting, by the laser cutting head, and for example concentrically with the processing beam, a vibrometer probing radiation onto the workpiece, the vibrometer probing radiation having a wavelength different from a wavelength of the processing laser radiation;
- Using a reflected portion of the vibrometer probing radiation that gets into the laser cutting head for measuring vibration of the workpiece.

The method may further comprise obtaining a two-dimensional camera image of the illuminated area illuminated by the vibrometer probing radiation on the surface of the workpiece, for example using a bandpass filter that lets through radiation having the wavelength of the vibrometer probing radiation but that filters out radiation with a substantially different wavelength.

The measured vibration may especially be used, as explained hereinbefore, for determining a quantity representative of a cutting quality, using rule-based and/or machine learning approaches.

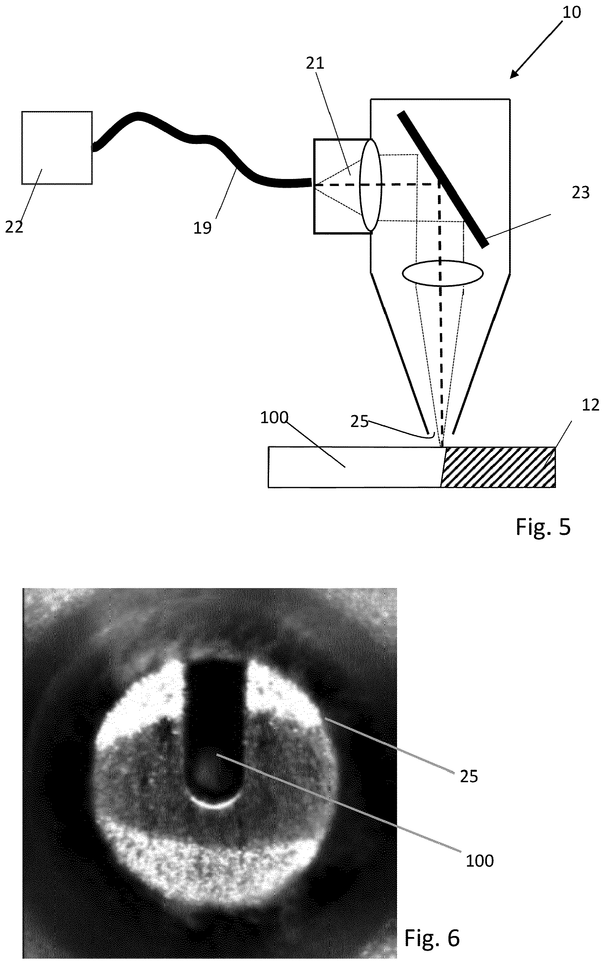

Hereinafter, embodiments of the present invention are described in more detail referring to drawings. In the drawings, same reference numbers refer to same or similar components. The drawings, with the exception of Fig. 6 illustrating a measurement, are schematical. They show:
- Fig. 1:: a flatbed laser cutting machine;
- Fig. 2: in part, a support grid;
- Fig. 3: a laser cutting head and a workpiece;
- Fig. 4: a laser Doppler vibrometer;
- Fig. 5: a further laser cutting head, with an external laser Doppler vibrometer;
- Fig. 6: a photograph through an exit opening of a laser machining nozzle taken during the cutting process, with a region around the spot of incidence of the processing beam illuminated by vibrometer probing radiation;
- Fig. 7: elements of a laser processing system; and
- Fig. 8: an illuminated area around the spot where the laser processing beam is incident.

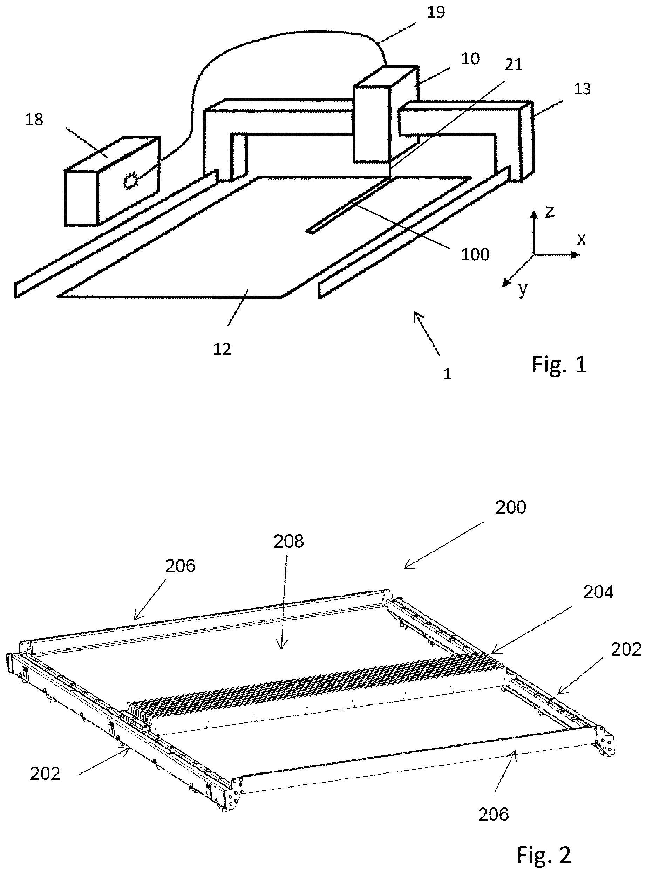

**Figure 1** shows an example of a laser cutting machine 1. The machine comprises a laser source 18 and a transport fiber 19, a laser cutting head 10, and a laser head moving mechanism. A workpiece 12 is supported by a workpiece support. The laser cutting head moving mechanism comprises a bridge 13 relative to which the laser cutting head 10 is movable in a first horizontal dimension (x dimension), and which itself is movable, for example on a pair or rails, in a second horizontal dimension (y dimension) relative to the working table and the workpiece 12. The laser cutting head may optionally in addition be movable in a vertical dimension (z dimension) towards and away from the working table. The workpiece 12 may be a metal sheet that is cut by a laser beam emitted by the laser cutting head. The processing laser beam 21 emitted by the laser cutting head 10 will in the illustrated embodiment propagate into a vertical downward (-z)-direction and will generate a cutting kerf 100 in the workpiece-.

The workpiece support 200 is shown, in part, in **Figure 2**. The workpieces support comprises a rectangular frame on which a plurality of grate elements 204 is mounted. Two support members 202 form together with two transverse beams 206 the rectangular frame, which defines a grate space 208. The grate elements 204 are hinged on the support members 202. In Fig. 2, only a small section of the grate space 208 is depicted to have grate elements 204; in practice for operation the whole grate space 208 or at least a major portion of it will comprise grate elements 204.

During operation of the machine, the workpiece 12 rests on the workpiece support and thereby is supported by the grate elements 204, while the laser cutting head moves relative to it in the x- and y-dimensions in accordance with a cutting plan.

In accordance with the present invention, the machine further comprises a laser vibrometer for detecting structure-borne sound in the workpiece. More specifically, the laser cutting head is equipped for emitting a probing beam onto the workpiece while the workpiece is being cut by the processing beam. The laser cutting head is also equipped for receiving a reflected portion of the probing beam and for using this reflected portion for a laser Doppler vibrometer measurement.

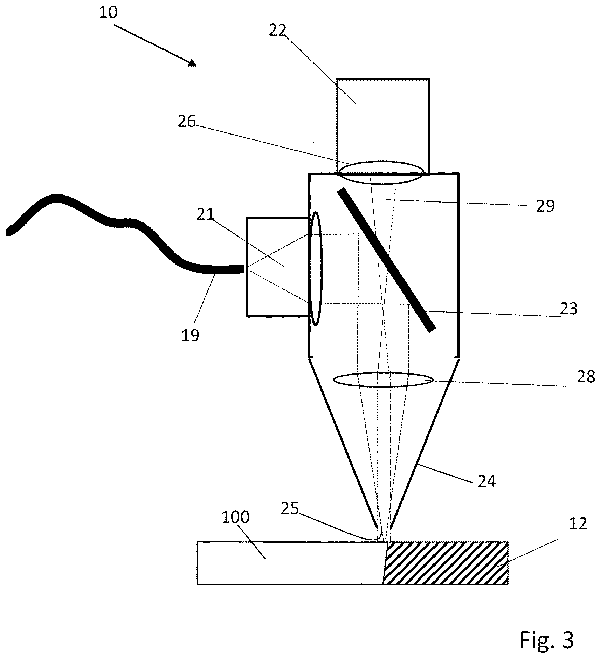

In the embodiment schematically shown in **Figure 3****,** the laser cutting head is equipped for the laser processing beam 21 to be directed towards the workpiece 12 by a dichroic mirror 23. The laser cutting head further comprises a vibrometer module 22 that generates the probing laser beam 29 and directs it onto the workpiece coaxially with the laser processing beam 21. The dichroic mirror 23 is reflective for the wavelength of the processing laser beam 21 but transparent for the - different - wavelength of the probing laser beam 29. The probing laser beam 29 has a width on the workpiece that is larger than the width of the processing laser beam 21, whereby it is assured that not the entire probing laser beam 29 enters into the cutting kerf 100 but that a portion of the probing laser beam 29 is reflected by the upper surface of the workpiece 12 in a vicinity of the spot where the processing laser beam 21 is incident, and thus in a vicinity of the cutting kerf. Fig. 3 illustrates a laser processing beam focusing lens 28 - for example adaptable, i.e. mounted to be displaceable so as to adapt the focus to different cutting processes, head-to-workpiece distances, and workpiece thicknesses. The processing beam focusing lens 28 - and/or other optical components involved in collimating and focusing the laser processing beam - is/are configured to focus the processing laser beam so that it has a smaller spot on the surface of the workpiece than the probing laser beam 29 that may also be guided through the processing beam focusing lens 28, as is illustrated in Fig. 3. The optical elements that interact with the probing laser beam 29 - Fig. 3 illustrates a probing beam lens 26 associated with the vibrometer module 22 - are configured such the probing laser beam 29 is, after its transition through the processing beam focusing lens 28, wider on the workpiece than the laser processing beam.

The reflected portion of the laser probing beam gets back into the laser cutting head, with an exit opening 25 of the laser machining nozzle 24 that forms part of the laser cutting head 10 serving as receiving structure. The reflected portion is guided back into the vibrometer module 22 where the laser Doppler vibrometry measurement is carried out.

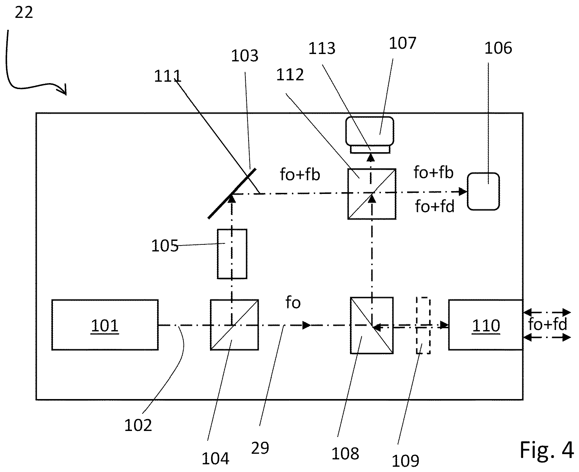

This is schematically illustrated in **Figure 4**. The measurement principle is per se known. Primary laser radiation 102 with a primary frequency fo - emitted by a probing laser source 101, usually a laser source emitting laser radiation with a high temporal coherence, for example a helium-neon laser, or also a laser diode, a fiber laser, or a Nd:YAG laser emitting radiation with a high coherence - is split by a first beam splitter 104 between the probing laser beam and a reference laser beam 111. The frequency of one of the probing laser beam 29 and of the reference laser beam 111 is shifted by a defined frequency shift fb (for example between 30 and 40 MHz). In the depicted embodiment, this is done for the reference laser beam 111, by a Bragg cell 105. The probing laser beam 29 is directed through the body of the laser cutting head to the workpiece as a target. In the depicted embodiment, the probing laser beam goes through an optional quarter-wave plate 109 (see below) and a beam expander 110 before leaving the laser vibrometer module (alternatively, such components could also be integrated in the laser cutting head outside the laser vibrometer module). Beam expanders are well documented in literature, work with typically two lenses and are well available.

The movement of the workpiece causes a Doppler shift of the frequency of the reflected radiation portion, thus the reflected radiation has a frequency fo+fd., with fd being a Doppler shift, proportional to the actual velocity of the reflecting surface of the workpiece. fd can be positive or negative.

The reflected radiation is, via a second beam splitter 108 and a third beam splitter 112, recombined with the reference laser beam 111 and the intensity of the recombined radiation is measured by a photodetector 106. The photodetector (possibly assisted by an appropriate lowpass filter or bandbass filter) responds to the beat frequency fb+fd. The output from the photodetector is a frequency modulated signal, with the Bragg cell induced shift frequency fb being a carrier frequency and the Doppler shift fd a modulation frequency. By demodulating the signal using a standard demodulation procedure, the velocity of the workpiece surface can be extracted as a function of time.

In the embodiment illustrated in Fig. 4, this functionality of the vibrometer is supplemented by 2D imaging, using the same probing laser beam 29 as an illumination source. To this end, the radiation coming back from the workpiece is also directed onto a 2D camera 107. In front of the 2D camera, there is a bandpass filter 113 that only lets light having a frequency corresponding to the frequency of the probing laser beam through and filters out light having the frequency of the processing laser beam. One branch of the third beam splitter 112 to which reference laser beam 111 portions and portions of the light coming back from the workpiece and coming from the second beam splitter 108 is guided may be used for this purpose.

It may especially be ensured that the first beam splitter 104 and/or the third beam splitter 112 (and/or the second beam splitter 108) is not a 50%:50% beam splitter. Rather, the portion of the primary radiation 102 that is used as the probing laser beam 29 may be substantially higher than the portion for the reference laser beam. In addition or as an alternative, the portion of the radiation coming from the workpiece that is incident on the 2D camera 107 may be substantially larger than the portion that impinges on the photodetector. In the embodiment of Fig 4, the beam splitter cubes that are used as the first beam splitter 104 and the third beam splitter 112 may have a substantially higher transmission than reflection by the (45°) partially reflecting internal interface.

To further increase the signal-to-noise ratio, polarization sensitive components may be used. More in particular, the first and second beam splitters 104, 108 may be polarizing beam splitters, and a quarter-wave plate 109 is placed in the path of the vibrometer probing radiation. Thereby, the radiation on the measurement path may propagate essentially loss-free to the workpiece and back to the 2D camera 107, as leaving the second beam splitter 108 and travelling towards the workpiece and the light coming back from the workpiece have orthogonal polarizations, because the quarter-wave plate 109 is passed twice on the way from the second beam splitter 108 back to the second beam splitter 108.

In the embodiment of Fig. 3, the vibrometer module 22 belongs to the laser cutting head and 10 and physically moves with it. This is, however, not a requirement. In an alternative embodiment, the laser cutting head 10 may emit the probing laser beam and receive the reflected vibrometer probing radiation for the vibrometry measurement without itself comprising the hardware of the vibrometer. This is illustrated in **Figure 5** where the vibrometry module 22 is external to the laser cutting head 10 and couples the probing laser beam into the transport fiber 19 that also directs the processing laser beam coming from the laser source (not shown in Fig. 5) to the laser cutting head 10. Especially, the probing laser beam may be directed into the cladding (or outer core) of the transport fiber 19, as for example suggested in WO2020084114A1. This embodiment has the advantage that the vibrometry module 22 is not exposed to any contamination from the cutting process and is not subject to the substantial accelerations, while the probing is, like in the embodiment of Fig. 3, independent of the cutting direction because the probing beam and the processing beam are concentrical.

**Figure 6** shows, for illustrating the approach according to embodiments of the invention, how the illumination by the probing laser beam may look like. Fig. 6 shows a photo through the exit opening 25 of the laser machining nozzle 24 taken during the cutting process. The probing laser beam basically illuminates the whole area seen through the exit opening 25 and thereby is much wider than the cutting kerf 100.

Generally, in embodiments the probing laser beam has a laser wavelength between 300 and 3000 nm, preferably between 500 and 1000nm, for example if a processing laser source being a fiber laser emitting at wavelength between 1060 and 1090 nm is used - thus the wavelength of the vibrometer probing radiation may be smaller than the wavelength of the processing laser and may be in the visible part of the spectrum, or in the very near infrared.

The 2D camera and a possible bandpass filter 113 as well as the photodetector are adapted to the wavelength of the probing laser beam. The laser power of the probing laser beam (to be specific: of the primary laser source 101 of the vibrometry module) is between 0.5 mW and 10 W.

The broadest range of vibration frequencies, measured by the vibrometer, of potential interest may be between 0 and 5 MHz. In embodiments, vibration can also be measured in a sub-range of this range. In embodiments, such sub-range can be within a range between 20kHz and 4MHz, more specific within a range between 30kHz and 500 kHz. Of course, it is not necessary that the measured sub-range is as broad as these broadest ranges. It may be sufficient to analyze a comparably narrower sub-range.

A laser processing system, to which the laser processing machine belongs, comprises a digital processing unit, which may be integrated in the laser processing machine or may comprise one or more devices separate from the laser processing machine. The digital processing unit determines a quantity representative of the cutting quality based on the vibrometer measurement, optionally taking into account further data, such as the 2D digital image generated by the 2D camera.

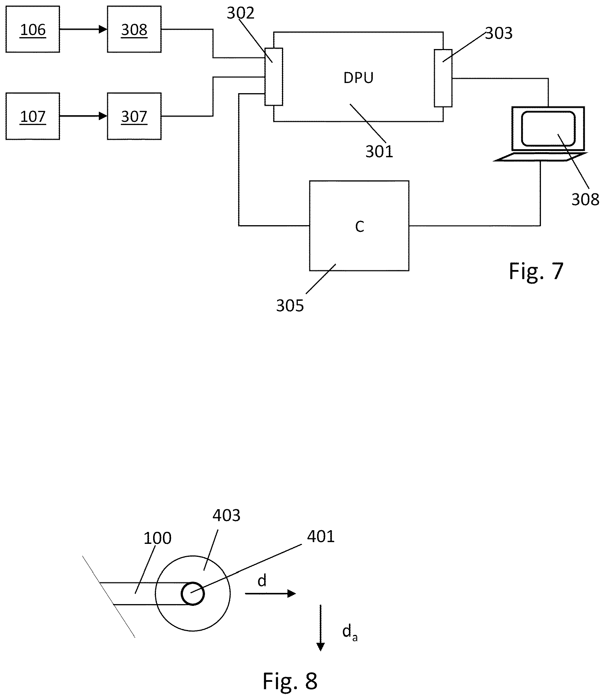

**Figure 7** shows a schematic representation of the digital processing unit 301 with an internal interface 302 to the laser processing machine and an external interface 303. The internal interface receives data from the vibrometer module 22, for example from an evaluation unit 308 that determines a sound spectrum from the data collected by the photodetector 106. In addition, it may also receive data coming from the 2D camera 107, for example via a camera image evaluation unit 307 in which the camera or an entity of the vibrometer module 22 integrating the camera pre-processes the acquired image data. From the received data (sound spectrum and/or camera data), it determines a quantity representative of a cutting quality. For example, it may determine a value for the size of the burr (also called dross), a value for the roughness of the cut edge and or for the roughness of the cut surface, and/or a quantitative quality value that carries information on both, the size of the burr and the roughness of the cut edge and/or roughness of the cut surface. Also other information may be representative of the cutting quality and may be considered, such as local color change (burning), etc.

Before the measured vibration, i.e., the structure-borne sound signal, is used for determining the cutting quality, known noises from other sound sources that do not contain any information about the cutting quality (such as the noise directly caused by the nozzle cooling air, process gas flow out of the nozzle, dust extraction) can be filtered out of the signals recorded by the vibrometer using suitable noise filters.

The evaluation unit 307 is also connected to a machine control 305 of the laser cutting machine. On the one hand, data coming from the machine control, such as actual processing laser power, assist gas feed, cutting speed (feed rate) etc. may go into the determination of the cutting quality. On the other hand, the determined quantity (in embodiments, it can be more than one quantity) is fed to the machine control 305 and may be used to have a direct influence on a cutting parameter, such as the processing laser power, the flow of assist gas, the cutting speed (feed rate), etc. For example, the machine control may reduce both, the processing laser power and the cutting speed if the cutting quality is determined to be below a situation dependent minimum, etc.

In addition to the shown connections, it is also possible to directly feed the signals coming from the photodetector 106 and/or from the camera 107 to the machine control 305.

Fig. 7 also illustrates a connection between the external interface 303 of the digital processing unit 301 and an external device 308 with input/output capability for an operator to be informed of the determined cutting quality and for the operator to influence the cutting parameters if necessary.

As is known in the field, the laser processing system will, in addition to the abovediscussed, be fed with data on the workpiece to be cut (material, thickness, possible coating, etc.) a cutting plan defining the path of the cut to be made and the sequence of cutting operations, etc. In the very schematically depicted set-up of Fig. 7, this information, or parts thereof may be supplied to the digital processing unit 301 via the machine control 5, via the external device 308, and/or in an other way if helpful.

For the cutting quality determination based on the vibrometer data and possibly image data, a machine learning algorithm may optionally be implemented.

Machine learning for cutting quality determination may include the following steps. Initially, the data from the vibrometer module are recorded for a plurality of cutting processes. For each of these cutting processes, cutting values being quantities representative of the cutting are determined by means that are different from the recorded vibration data, for example by measurements of the burr size, of edge roughness and/or surface roughness, of coloring, and/or of the other geometry information (for example, but not necessarily, using 2D images obtained by the 2D camera if present), or by giving the cutting quality a subjective quality value determined by an experienced user after visual inspection. The recorded vibration data and the quality values are fed to a machine learning tool of the digital processing unit 301 or installed on an external device 308. The machine learning tools are trained by these data to be capable of predicting the quality value from the vibration data. Machine learning tools capable of doing so by finding correlations are available on the market, the accurateness of the prediction depending on the number and diversity of the data from the vibrometer module that were initially recorded and used for the training.

The tools used for machine learning may for example include a neural network, in particular a deep neural network.

In embodiments, the data used to train the cutting quality determination by machine learning include the 2D images obtained by the 2D camera. These embodiments then will allow to determine the cutting quality using two data sources, namely the vibration data and in addition the 2D images. Using two data sources, sensor fusion can be applied, i.e. both data sources can be used to train the neural network in a same run. The advantage of using both sensor data is that it allows to a more accurate determination of cutting quality.

Operating the laser processing system after training will then comprise recording the vibration data, and for example also the 2D image, while the cut is being made and determining the quantity representative of the cutting quality of the laser cut - such as the quality value - from the vibration data and optionally in addition from the 2D image by the machine learning tool. In embodiments, the determined quantity may be used to have a direct influence on the processing parameters of the laser cutting process, for example in that the quality value is compared with a quality threshold. If the quality value is below the quality threshold, the cutting operation may be interrupted, or the processing parameters may be adapted, for example by reducing the laser power and the cutting speed, etc.

In embodiments, the quantity representative of the cutting quality of the laser cut includes more than just a single quality value but more qualified information on the cut, for example also information that allows to distinguish between different reasons for a not-ideal quality of the cut. In such embodiments, for example, the adaptation of the processing parameters may be made dependent on this. For example, if it is determined that the workpiece material gets too hot next to the kerf, instead of reducing the cutting speed, the assist gas flow may be enhanced, etc.

Cutting experiments in the course of which the structure-borne sound was measured using a laser Doppler vibrometer integrated in the laser cutting head, the measured vibration (i.e., the acoustic signals) analyzed by means of AI, in particular with neural networks have confirmed: A significant amount of information on cutting quality (primarily burr and edge roughness), is found in the structure-borne sound measurements. Especially, significantly more information can be found in structure-borne sound than in the airborne sound measurements.

**Figure 8** schematically illustrates the spot 401 where the processing laser is incident on the workpiece surface as well as the cutting kerf 100 if the processing laser beam is moved in a moving direction d. The illuminated area 403 illuminated by the probing laser beam is incident concentrically with the spot 401 and is larger than the latter. Because of this concentricity, the results of the vibrometer measurement will not depend on the moving direction. If the movement changes to the laser processing beam moving in an alternative moving direction dₐ, no re-adjustment of any property of the probing laser beam is necessary.

## Claims

1. A flatbed laser cutting machine (1) for cutting sheet metal workpieces (12), comprising a laser cutting head (10), a processing laser source (18), and a workpiece support (200) for supporting a metal sheet workpiece (12), and being equipped for causing the laser cutting head (10) to move relative to the workpiece support in at least two dimensions (x, y) and being equipped to emit laser processing radiation generated by the processing laser source from the laser cutting head towards a workpiece placed on the workpiece support for making a controlled cut in the workpiece when the laser cutting head moves relative to the workpiece support, **characterized by** a vibrometer (22) that is equipped to emit vibrometer probing radiation (29) onto the workpiece, and to measure, using a reflected portion of the vibrometer probing radiation, vibration of the workpiece in a contactless manner, wherein the flatbed laser cutting machine is equipped for the laser cutting head (10) to emit the vibrometer probing radiation (29) and to receive the reflected portion.

2. The flatbed laser cutting machine according to claim 1, wherein the vibrometer probing radiation (29) is a probing laser radiation, whereby the vibrometer (22) is a Laser Doppler vibrometer, and wherein the flatbed laser cutting machine (1) further comprises a probing laser source (101) for generating the probing laser radiation (29).

3. The flatbed laser cutting machine according to claim 1 or 2, being equipped to emit the vibrometer probing radiation (29) from the laser cutting head (10) coaxially with the processing laser radiation.

4. The flatbed laser cutting machine according to any one of claims 1-3, wherein the vibrometer (22) is integrated in the laser cutting head (10).

5. The flatbed laser cutting machine according to any one of claims 1-3, wherein the processing laser source (18) is external to the laser cutting head (10), with a transport fiber (19) guiding the processing laser radiation to the laser cutting head (10), wherein a probing radiation source (101) of the vibrometer probing radiation (29) is external to the laser cutting head, wherein the flatbed laser cutting machine is equipped for the vibrometer probing radiation to be coupled into the transport fiber (19) and to be guided to the laser cutting head coaxially with the processing laser radiation, , and wherein the flatbed laser cutting machine is also equipped to guide the reflected portion from the laser cutting head to the vibrometer (22), whereby the vibrometer (22) is external to the laser cutting head.

6. The flatbed laser cutting machine according to any one of claims 1-5, further comprising a camera equipped to capture a two-dimensional image of an illuminated area (403) illuminated by the vibrometer probing radiation, whereby a probing radiation source (101) of the vibrometer probing radiation is also an illumination source for illuminating the workpiece for camera monitoring of the cutting.

7. The flatbed laser cutting machine according to claim 6, comprising a reflected radiation beam splitter (112) for reflected vibrometer probing radiation, wherein a first fraction of the reflected vibrometer probing radiation is directed to the camera (107) and a second fraction of the reflected vibrometer probing radiation is directed to a photodetector (106) of the vibrometer.

8. The flatbed laser cutting machine according to claim 6 or 7 , wherein the vibrometer probing radiation (29) has a wavelength different from a wavelength of the processing laser radiation, and wherein the flatbed laser cutting machine comprises an optical filter (113) allowing radiation having the wavelength of the vibrometer probing radiation to pass while not allowing radiation having the wavelength of the processing laser radiation to pass, the optical filter (113) placed to filter radiation before it enters the camera (107).

9. The flatbed laser cutting machine according to any one of claims 6 to 8, further comprising a beam expander (102) arranged to expand a beam of the vibrometer probing radiation on a path to the workpiece (12).

10. The flatbed laser cutting machine according to any one of claims 6 to 9, further comprising a polarizing beam splitter (108) arranged in a path of the vibrometer probing radiation, and a quarter-wave plate (109) arranged to be passed by the vibrometer probing radiation, on its way to the workpiece, after the polarizing beam splitter, whereby the a portion of the vibrometer probing radiation travelling from the polarizing beam splitter (108) towards the workpiece and the reflected portion of the vibrometer probing radiation coming back to the polarizing beam splitter (108) have orthogonal polarizations.

11. A laser processing system, the laser processing system comprising the flatbed laser cutting machine according to any one of claims 1-10, the laser processing system comprising a digital processing unit (301) configured to determine a cutting quality from the measured vibration.

12. A method of operating a flatbed laser cutting machine, the method comprising the steps of providing the laser cutting machine comprising a laser cutting head (10) and a workpiece support (200) for supporting a metal sheet workpiece, the method comprising the steps of
• Placing a metal sheet workpiece (12) on the workpiece support (200);
• Emitting, by the laser cutting head (10) a beam of processing laser radiation (21) onto the workpiece (12) while it is supported by the workpiece support (200) and moving the laser cutting head (10) relative to the workpiece support (200) while the processing laser radiation is being emitted;
• While the processing laser radiation (21) is being emitted, emitting, by the laser cutting head (10), a vibrometer probing radiation (29) onto the workpiece (12), the vibrometer probing radiation having a wavelength different from a wavelength of the processing laser radiation;
• Using a reflected portion of the vibrometer probing radiation (29) that gets into the laser cutting head for measuring vibration of the workpiece (12).

13. The method according to claim 12, wherein in the step of emitting the vibrometer probing radiation, the vibrometer probing radiation is caused to be emitted concentrically with the processing laser radiation, with an illuminated area (403) illuminated by the vibrometer probing radiation on a surface of the workpiece (12) being larger than a spot size of a spot (401) where the processing laser radiation is incident on the surface.

14. The method according to claim 12 or 13 and comprising the step of obtaining a two-dimensional camera image of the illuminated area (403) illuminated by the vibrometer probing radiation on the surface of the workpiece (12).

15. The method according to any one of claims 12-14, and comprising the step of using the measured vibration, being induced by structure-borne sound, to determine a cutting quality of a cut generated in the workpiece by the processing laser radiation.
